# EUROPÄISCHE PATENTSCHRIFT

(11) **EP 3 087 282 B1**
(45) Veröffentlichungstag und Bekanntmachung des Hinweises auf die Patenterteilung: **07.10.2020**
(21) Anmeldenummer: 14838772.3
(22) Anmeldetag: 18.12.2014
(51) Int. Cl.: F16C 33/12, F16C 17/02

(54) **MEHRSCHICHTGLEITLAGER**
MULTI-LAYER SLIDING BEARING
PALIER LISSE MULTICOUCHE

(30) Priorität: 23.12.2013 AT 508502013
(43) Veröffentlichungstag der Anmeldung: 02.11.2016
(73) Patentinhaber: Miba Gleitlager Austria GmbH, 4663 Laakirchen (AT)
(72) Erfinder: ZIDAR, Jakob, A-4813 Altmünster (AT)
(74) Vertreter: Burger, Hannes
(86) Internationale Anmeldenummer: PCT/AT2014/050303
(87) Internationale Veröffentlichungsnummer: WO 2015/095905

(56) Entgegenhaltungen:
- EP-A1- 2 114 668
- EP-A2- 2 341 257
- WO-A1-01/84004
- AT-A4- 511 196
- DE-A1- 3 629 451
- GB-A- 706 672
- GB-A- 1 202 856
- US-A- 5 185 216
- US-B1- 6 194 087

## Beschreibung

Die Erfindung betrifft ein Mehrschichtgleitlager umfassend in der angegebenen Reihenfolge eine Stützschicht, eine Lagermetallschicht, eine Diffusionssperrschicht bestehend aus einer Legierung und eine Gleitschicht, die aus einer Zinnbasislegierung gebildet ist.

Die Verwendung von Zinnbasislegierungen, beispielsweise Weißmetallen, für Gleitschichten von Mehrschichtgleitlagern ist aus dem Stand der Technik ebenso bekannt wie die Verwendung von Kupferbasislegierungen, beispielsweise Bronzen, für Lagermetallschichten. Da das Zinn eine ausgeprägte Neigung zur Diffusion aufweist, wird zur Vermeidung der Diffusion zwischen diesen beiden Schichten häufig eine Nickelschicht angeordnet.

Aus dem Stand der Technik sind weiter Nickel-Zinn-Zwischenschichten bekannt. Diese nickelhaltigen Zwischenschichten können mitunter an den Diffusionsprozessen teilnehmen, wie dies beispielsweise in der DE 199 63 385 C1 ausgeführt ist. Diese Druckschrift beschreibt einen Schichtverbundwerkstoff für Gleitlager mit einer Trägerschicht, einer Lagermetallschicht, einer ersten Zwischenschicht aus Nickel, einer zweiten Zwischenschicht aus Zinn und Nickel sowie mit einer aus Kupfer und Zinn bestehenden Gleitschicht, die eine Zinnmatrix aufweist, in die Zinn-Kupfer-Partikel eingelagert sind, die aus 39 Gew.-% bis 55 Gew.-% Kupfer und Rest Zinn bestehen. Bei diesem Schichtaufbau ist das Abwandern des Zinns aus der Gleitschicht in die Nickelschicht durch Diffusion gewünscht, da damit eine Aufkonzentration der harten Zinn-Kupfer-Partikel in der Gleitschicht stattfindet, wodurch die Tagfähigkeit der Gleitschicht verbessert wird. Dies geht sogar soweit, dass sich die "Matrix" der Gleitschicht im Laufe der Betriebsdauer von Zinn auf Zinn-Kupfer-Partikel ändert.

Zur Vermeidung der Reduktion des Kupferanteils in den äußeren Bereichen der Gleitschicht beschreibt die GB 2 375 801 A ein Mehrschichtlager mit einer zweischichtigen Gleitschicht, wobei die äußere Teilschicht aus einer Zinnbasislegierung mit 0,5-10 Gew.-% Cu und gegebenenfalls bis 5 Gew.-% Zn, In, Sb oder Ag, und die darunter liegende, zweite Teilschicht aus einer Zinnbasislegierung mit 5-20 Gew.-% Cu gebildet ist.

Die EP 2 341 257 A2 beschreibt ein Mehrschichtgleitlager umfassend zumindest eine Stützmetallschicht, eine Gleitschicht aus einer Zinnbasislegierung und gegebenenfalls eine zwischen der Gleitschicht und der Stützmetallschicht angeordnete Lagermetallschicht. Gemäß einer Ausführungsvariante des Mehrschichtgleitlagers ist vorgesehen, dass zwischen der Lagermetallschicht und der Gleitschicht eine Zwischenschicht angeordnet ist, die aus einer oder mehreren Teilschichten besteht, die galvanisch abgeschieden oder durch Diffusion gebildet werden, und jede der Teilschichten bzw. die Zwischenschicht selbst eines oder mehrere der Elemente aus der Gruppe Chrom, Nickel, Eisen, Kobalt, Kupfer und Zinn enthält, wobei auch Mischvarianten möglich sind, also beispielsweise Zwischenschichten verwendet werden, die zumindest zwei dieser Elemente enthalten, z.B. aus Chrom und Nickel oder Eisen und Zinn bestehen. Es kann damit dem Mehrschichtgleitlager eine bessere Strukturfestigkeit verliehen werden, insbesondere im Hinblick auf die relativ weiche Zinnbasislegierung der Gleitschicht. GB 706 672 A offenbart ein Mehrschichtgleitlager gemäß dem Oberbegriff des Anspruchs 1.

AT 511 196 A4, US 6 194 087 B1, US 5 185 216 A, DE 36 29 451 A1, EP 2 114 668 A1 und GB 1 202 856 A offenbaren jeweils ein Mehrschichtgleitlager mit einer Diffusionssperrschicht.

WO 01/84004 A1 offenbart ein Mehrschichtgleitlager wobei die Gleitschicht kleiner als die Lagermetallschicht ist.

Der Erfindung liegt die Aufgabe zu Grunde, eine Möglichkeit zu schaffen, mit der eine Verschlechterung der tribologischen Eigenschaften einer Gleitschicht aus einer Zinnbasislegierung über einen möglichst langen Zeitraum minimiert bzw. verhindert werden kann, insbesondere wenn unterhalb der Zinnbasislegierung eine Kupferbasislegierung angeordnet ist.

Diese Aufgabe wird durch ein Mehrschichtgleitlager nach Anspruch 1 gelöst.

Von Vorteil ist dabei, dass durch die Diffusionssperrschicht aus der Kupferlegierung nicht nur die Diffusion von Zinn aus der Gleitschicht verringert werden kann, sondern dass diese Diffusionssperrschicht auch an der Tragfähigkeit des Mehrschichtgleitlagers teilnimmt. Da diese Diffusionssperrschicht eine relativ hohe Härte aufweist (bis zu ca. 400 HV(0,025)) ist die Diffusionssperrschicht auch gegen auftretenden Verschleiß wirksam, sodass also die Diffusionssperrschicht eine doppelte Funktionalität aufweist. Überraschenderweise muss die Diffusionssperrschicht nicht durchgehend über die gesamte Fläche zwischen der Lagermetallschicht und der Gleitschicht ausgebildet sein, um gegen die Diffusion des Zinns wirksam zu sein. Gemäß einer bevorzugten Ausführungsvariante kann vorgesehen sein, dass die Lagermetallschicht Kupfer enthält, insbesondere aus einer Kupferbasislegierung gebildet ist. Es ist damit möglich, zwischen der Lagermetallschicht und der Diffusionssperrschicht aufgrund der besseren Materialverträglichkeit einen besseren Haftverbund herzustellen.

Bevorzugt weist die Diffusionssperrschicht eine durchschnittliche Schichtdicke von mindestens 0,5 µm auf, wodurch die voranstehend genannten Effekte weiter verbessert werden können.

Aus demselben Grund kann nach einer anderen Ausführungsvariante auch vorgesehen sein, dass die Diffusionssperrschicht über zumindest 85 % ihrer Fläche eine Schichtdicke von zumindest 0,5 µm aufweist.

Zwischen der Lagermetallschicht und der Diffusionssperrschicht kann eine Nickelschicht angeordnet sein. Es ist damit möglich als Lagermetallschicht auch bleihaltige Legierungen einzusetzen, da die Diffusion von Blei in die Zinnbasislegierung der Gleitschicht verhindert bzw. verzögert werden kann. Andererseits kann durch die Anordnung der Nickelschicht ein besserer Haftverbund zwischen der Zinnbasislegierung der Gleitschicht und einer Lagermetallschicht auf Aluminiumbasis erreicht werden. Die Nickelzwischenschicht ermöglicht also ein breiteres Spektrum an Lagermetallen in dem Mehrschichtgleitlager.

Vorzugsweise enthält die Diffusionssperrschicht maximal 10 Gew.-% Nickel. Es wurde nämlich gefunden, dass sich Nickel als Legierungselement negativ auf die Barriereeigenschaften der Diffusionssperrschicht auswirkt bzw. auswirken kann.

Die Diffusionssperrschicht kann zwischen 3 Gew.-% und 30 Gew.-% Antimon enthalten. Es kann damit die Härte der Diffusionssperrschicht und somit deren Eigenschaft der Tragfähigkeit weiter verbessert werden. Bei einem Anteil an Antimon von weniger als 3 Gew.-% ist diese Verbessrung der Eigenschaften der Diffusionssperrschicht zu wenig ausgeprägt. Andererseits wird die Diffusionssperrschicht bei einem Anteil von mehr als 30 Gew.-% zu spröde.

Vorzugsweise enthält die Diffusionssperrschicht Cu6Sn5-Phasen. Diese Phasen können die Tragfähigkeit der Diffusionssperrschicht verbessern. Darüber hinaus scheiden sich diese Phasen bei galvanischer Abscheidung der Diffusionssperrschicht bevorzugt in Form von runden Kristallen ab, wodurch eine Kerbwirkung dieser Phasen vermieden werden kann.

In der bevorzugten Ausführungsvariante der Erfindung enthält die Zinnbasislegierung der Gleitschicht zwischen 0 Gew.-% und 25 Gew.-% Kupfer und zwischen 0 Gew.-% und 15 Gew.-% Antimon, mit der Maßgabe, dass der Summenanteil an Antimon und Kupfer zwischen 2 Gew.-% und 25 Gew.-% beträgt. Durch die Zugabe von Antimon kann die Umwandlung bei tiefen Temperaturen, denen Gleitlager zumindest im Winter ausgesetzt sein können, von β-Zinn in α-Zinn und damit ein Härteabfall bzw. die Zerstörung der Gleitschicht verhindert werden. Zudem erhöht Antimon wie Kupfer die Härte der Zinnbasislegierung. Mit Anteilen von mehr als 25 Gew.-% Kupfer und/oder mehr als 15 Gew.-% Antimon wird allerdings die Zinnbasislegierung zu spröde. Mit der Zugabe von Antimon kann zudem der Härteabfall der Zinnbasislegierung über die Zeit verringert werden.

Zum besseren Verständnis der Erfindung wird diese anhand der nachfolgenden Figur näher erläutert.

Es zeigt in vereinfachter, schematischer Darstellung:

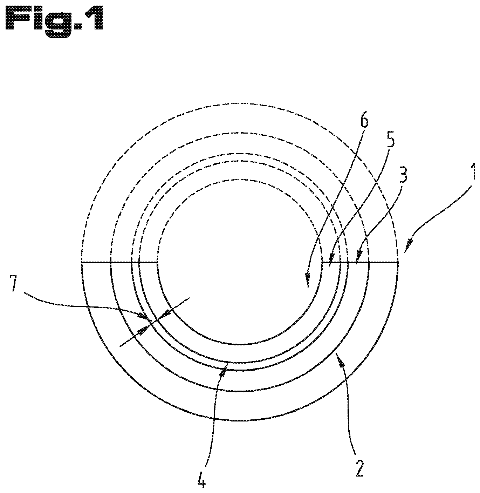

- Fig. 1: ein Mehrschichtgleitlager in Form einer Halbschale.

Einführend sei festgehalten, dass die in der Beschreibung gewählten Lageangaben, wie z.B. oben, unten, seitlich usw. auf die unmittelbar beschriebene sowie dargestellte Figur bezogen sind und sind diese Lageangaben bei einer Lageänderung sinngemäß auf die neue Lage zu übertragen.

Fig. 1 zeigt ein Mehrschichtgleitlager 1 in Form einer Gleitlagerhalbschale. Dargestellt ist eine vierschichtige Variante des Mehrschichtgleitlagers 1 bestehend aus einer Stützschicht 2, einer Lagermetallschicht 3, einer Diffusionssperrschicht 4 und einer Gleitschicht 5, die eine radial innere Lauffläche 6 des Mehrschichtgleitlagers 1 bildet und an die ein zu lagerndes Bauteil anlegbar ist.

Der prinzipielle Aufbau derartiger Mehrschichtgleitlager 1, wie sie z.B. in Verbrennungskraftmaschinen Verwendung finden, ist aus dem Stand der Technik bekannt, sodass sich weitere Ausführungen hierzu erübrigen.

Im Rahmen der Erfindung kann das Mehrschichtgleitlager 1 auch anders ausgeführt sein, beispielsweise als Lagerbuchse, wie dies in Fig. 1 strichliert angedeutet ist. Ebenso sind Ausführungen wie Anlaufringe, axial laufende Gleitschuhe, oder dergleichen möglich.

Die Stützschicht 2 besteht bevorzugt aus Stahl, kann aber auch aus einem anderen Werkstoff bestehen, der dem Mehrschichtgleitlager 1 die erforderliche Strukturfestigkeit verleiht. Derartige Werkstoffe sind aus dem Stand der Technik bekannt.

Für die Lagermetallschicht 3 können die aus dem einschlägigen Stand der Technik bekannten Legierungen bzw. Werkstoffe verwendet werden, und sei diesbezüglich darauf verwiesen. Vorzugsweise werden Lagermetalle auf Aluminiumbasis (tlw. nach DIN ISO 4381 bzw. 4383) verwendet, wie z.B. AlSn6CuNi0,8-1, AlSn20Cu, AlSi4Cd, AlCd3CuNi, AlSi11Cu, AlSn6Cu, AlSn40Cu0,5-1, AlSn25CuMn, AlSi11CuMgNi, AlSn9,5CuMn0,6, AlZn4,5Si1,5Cu.

Besonders bevorzugt wird als Lagermetall für die Lagermetallschicht 3 eine Legierung verwendet, die Kupfer enthält, wobei diese insbesondere aus einer Kupferbasislegierung gebildet ist. Derartige Lagermetalle auf Kupferbasis (tlw. nach DIN ISO 4383) sind z.B. CuSn10, Cu-Al10Fe5Ni5, CuZn31Si1, CuPb24Sn2, CuSn8Bi10, CuSn8Zn3, CuSn5Ni, CuSn5Si, CuSn5Zn, CuAl10Ni.

Selbstverständlich können auch andere als die genannten Lagermetalle auf Basis von Aluminium-, Nickel-, Kupfer-, Silber-, Eisen- oder Chromlegierungsschichten verwendet werden.

Die Lagermetallschicht 3 kann durch Walzplattieren auf die Stützschicht 3 aufgebracht werden. Der dadurch gebildete Bimetallstreifen kann gegebenenfalls umgeformt und/oder spanabhebend bearbeitet werden.

Die Gleitschicht 5 ist aus einer Zinnbasislegierung gebildet. Prinzipiell ist jede geeignete, aus dem Stand der Technik bekannte Zinnbasislegierung, die für Gleitlager verwendet wird, einsetzbar. Bevorzugt besteht die Gleitschicht 5 aber aus einer Zinnbasislegierung die zwischen 0 Gew.-% und 25 Gew.-%, insbesondere zwischen 0,5 Gew.-% und 20 Gew.-%, Kupfer und zwischen 0 Gew.-% und 15 Gew.-%, insbesondere zwischen 4 Gew.-% und 10 Gew.-%, Antimon enthält, mit der Maßgabe, dass der Summenanteil an Antimon und Kupfer zwischen 2 Gew.-% und 25 Gew.-% beträgt.

Eine andere bevorzugte Ausführungsvariante der Zinnbasislegierung für die Gleitschicht 5 enthält neben Zinn als Hauptlegierungselement zumindest ein weiteres Element aus der Gruppe Antimon und Kupfer, gegebenenfalls Blei und/oder Bismut, sowie gegebenenfalls zumindest ein Element aus einer Gruppe umfassend Zirkonium, Silizium, Zink, Nickel, Kobalt und Silber, und aus der Herstellung der Elemente stammende unvermeidbare Verunreinigungen enthält, wobei der Antimonanteil maximal 20 Gew.-%, der Kupferanteil maximal 10 Gew.-%, der Summenanteil an Blei und Bismut maximal 1,5 Gew.-%, der Summenanteil an Kupfer und Antimon mindestens 2 Gew.-% und der Summenanteil an Zirkonium, Silizium, Zink, Nickel, Kobalt und Silber maximal 3 Gew.-% betragen. Insbesondere kann die Gleitschicht 5 aus einer Zinnbasislegierung bestehen wie sie in der AT 509 111 A1 beschrieben ist, auf die in diesem Zusammenhang ausdrücklich Bezug genommen wird.

Vorzugsweise wird die Zinnbasislegierung der Gleitschicht 5 galvanisch abgeschieden, insbesondere unter Anwendung der Abscheideparameter wie sie in der AT 509 111 A1 beschrieben ist, auf die in diesem Zusammenhang ausdrücklich Bezug genommen wird.

Die Diffusionssperrschicht 4 besteht aus einer Legierung mit Kupfer, insbesondere einer Kupferbasislegierung mit Kupfer als Hauptbestandteil (sodass Kupfer also mengenmäßig den größten Anteil an der Kupferlegierung aufweist). Die Diffusionssperrschicht 4 ist also nicht als reine Kupferschicht ausgebildet. Der Mengenanteil an Kupfer in der Diffusionssperrschicht 4 beträgt mindestens 30 Gew.-%, vorzugsweise mindestens 40 Gew.-%. Der Maximalanteil an Kupfer in der Diffusionssperrschicht beträgt 90 Gew.-%, vorzugsweise 80 Gew.-%.

Neben Kupferbasislegierungen können auch Zinnbasislegierungen mit dem angegebenen Mindestgehalt an Kupferverwendet werden.

Neben Kupfer oder Zinn als Hauptlegierungselement ist in der Diffusionssperrschicht 4 zumindest ein weiteres Legierungselement enthalten, das ausgewählt ist aus einer Gruppe umfassend oder bestehend aus Germanium, Zinn, Indium, Zink, Nickel, Kobalt, Bismut, Blei, Silber, Antimon sowie aus der Herstellung stammende unvermeidbare Verunreinigungen enthält, wobei der Summenanteile dieser Legierungselemente mindestens 1 Gew.-% und maximal 30 Gew.-% beträgt, und wobei in der Kupferlegierung aus Kupfer und dem zumindest einem Element gebildete Kupfer-Mischkristall-Körner vorliegen.

Der Zinngehalt kann zwischen 5 Gew.-% und 25 Gew.-%, bevorzugt zwischen 8 Gew.-% und 19 Gew.-%, insbesondere zwischen 10 Gew.-% und 16 Gew.-%, betragen.

Der Zinkgehalt kann zwischen 0,5 Gew.-% und 25 Gew.-%, bevorzugt zwischen 1 Gew.-% und 5 Gew.-%, betragen.

Der Gehalt an Germanium kann zwischen 3 Gew.-% und 15 Gew.-%, vorzugsweise zwischen 4 Gew.-% und 10 Gew.-%, betragen.

Der Gehalt an Indium kann zwischen 0,2 Gew.-% und 20 Gew.-%, vorzugsweise zwischen 1 Gew.-% und 5 Gew.-%, insbesondere zwischen 2 Gew.-% und 4 Gew.-%, betragen.

Der Gehalt an Nickel kann zwischen 0 Gew.-% und 10 Gew.-%, vorzugsweise zwischen 0 Gew.-% und 1 Gew.-%, insbesondere zwischen 0 Gew.-% und 0,1 Gew.-%, betragen.

Der Gehalt an Kobalt kann zwischen 0,2 Gew.-% und 8 Gew.-%, vorzugsweise zwischen 0,5 Gew.-% und 5 Gew.-%, insbesondere zwischen 1 Gew.-% und 3 Gew.-%, betragen.

Der Gehalt an Bismut kann zwischen 1 Gew.-% und 25 Gew.-%, vorzugsweise zwischen 2 Gew.-% und 15 Gew.-%, insbesondere zwischen 5 Gew.-% und 10 Gew.-%, betragen.

Der Gehalt an Blei kann zwischen 1 Gew.-% und 25 Gew.-%, vorzugsweise zwischen 2 Gew.-% und 15 Gew.-%, insbesondere zwischen 5 Gew.-% und 10 Gew.-%, betragen.

Der Gehalt an Antimon kann zwischen 3 Gew.-% und 30 Gew.-%, vorzugsweise zwischen 3 Gew.-% und 10 Gew.-%, insbesondere zwischen 1 Gew.-% und 5 Gew.-%, betragen.

Der Anteil an Silber in der Kupferbasislegierung kann zwischen 1 Gew.-% und 20 Gew.-%, bevorzugt zwischen 2 Gew.-% und 10 Gew.-%, betragen.

Vorzugsweise beträgt der Gehalt an einem oder mehreren der Elemente Germanium, Indium, Zink, Nickel, Kobalt, Bismut, Blei, Silber und Antimon in Summe zwischen 0,2 Gew.-% und 20 Gew.-%.

Durch Kombinationen dieser Elemente können die Eigenschaften der Diffusionssperrschicht 4 gezielt eingestellt werden bzw. auf den jeweiligen Anwendungsfall maßgeschneidert werden.

Es wurde dabei beobachtet, dass unter einem gewissen Gehalt der Effekt zu gering ist, über einem gewissen Wert und insbesondere über dem Summenwert von 30 Gew.-% sich große Mengen harter, spröder intermetallischer Phasen bilden, die sich negativ auf die der Diffusionssperrschicht 4 auswirken.

So wird beispielsweise eine Cu-Sn oder Cu-Ge Legierung durch Zusatz von 1 Gew.-% bis 25 Gew.-% Zn oder 1 Gew.-% bis 20 Gew.-% Indium deutlich unempfindlicher gegen den korrosiven Angriff, insbesondere schwefelhaltiger, Öladditive.

Eine Cu-Al Legierung wird durch Zusatz von 0,2 Gew.-% bis 15 Gew.-% Antimon deutlich verschleißfester, da ein Teil der Legierungselemente als feindisperse AlSb-Hartphase ausgeschieden wird.

Durch Zulegieren von Nickel und/oder Kobalt kann die mechanische Festigkeit der Beschichtung und deren Korrosionsbeständigkeit stark erhöht werden. Insbesondere durch Nickel wird auch die Verformbarkeit verbessert. Es hat sich in Hinblick auf Nickel jedoch gezeigt, dass damit die Barriereeigenschaften der Diffusionssperrschicht 4 verschlechtert werden. Daher ist es bevorzugt, wenn die Diffusionssperrschicht 4 nickelfrei ist. Ebenso ist die Diffusionssperrschicht 4 vorzugsweise kobaltfrei.

Durch Zulegieren eines oder mehrerer Elemente aus der Gruppe Blei, Bismut und Silber wird eine weitere Phase in das Gefüge eingebracht, die besonders gute Gleiteigenschaften aufweist. Dadurch kann eine Schädigung unter extremen Betriebszuständen (vergleichbar mit den Notlaufeigenschaften eines Lagermetalls) reduziert werden. Blei und Bismut sind jedoch besonders weiche Materialien, die potenziell die Belastbarkeit der Beschichtung schwächen könnten, daher ist ihr Gehalt nach oben zu begrenzen. Letzteres auch aus dem Grund, dass die Barriereeigenschaften nicht verschlechtert werden.

Silber wird von vielen, insbesondere schwefelhaltigen Öladditiven, stark angegriffen. Dieser unerwünschte Effekt tritt besonders ausgeprägt bei Gehalten über 20 Gew.-% auf.

Diese Kupferbasislegierungen werden bevorzugt galvanisch auf dem jeweiligen Substrat, also beispielsweise der Lagermetallschicht 3, abgeschieden. Der Elektrolyt hierfür kann cyanidhaltig oder bevorzugt cyanidfrei sind. Bevorzugte Parameter für die Abscheidung sowie bevorzugte Badzusammensetzungen sind in den folgenden Beispielen wiedergegeben.

### Beispiel 1: cyanidhaltiger Elektrolyt

| | |
|---|---|
| Kupfer (I) | 0,25 mol/l - 0,35 mol/l |
| Zinn (IV) | 0,10 mol/l - 0,20 mol/l |
| | |
| Freies Cyanid | 0,30 mol/l - 0,45 mol/l |
| Freie Alkalität | 0,20 mol/l - 0,30 mol/l |
| Tartrat | 0,10 mol/l - 0,20 mol/l |
| Additiv | 0,5 g/l - 5 g/l |
| Temperatur | 55 °C - 65 °C |
| Stromdichte | 1 A/dm² - 4 A/dm² |

### Beispiel 2: cyanidfreier Elektrolyt auf Methansulfonsäure- oder Tetrafluoroborsäurebasis

| | |
|---|---|
| Kupfer (II) | 0,25 mol/l - 0,35 mol/l |
| Zinn (II) | 0,10 mol/l - 0,20 mol/l |
| Freie Säure | 0,8 mol/l - 2 mol/l |
| Additiv | 5 g/l- 50 g/l |
| Temperatur | 20 °C - 30 °C |
| Stromdichte | 0,5 A/dm² - 3 A/dm² |

### Beispiel 3: cyanidfreier Elektrolyt auf Pyrophosphat- oder Phosphonatbasis

| | |
|---|---|
| Kupfer (II) | 0,10 mol/l - 0,40 mol/l |
| Zinn (II) | 0,05 mol/l - 0,50 mol/l |
| pH-Wert | 8 - 10 |
| Additiv | 0,5 g/l - 50 g/l |
| Temperatur | 40 °C - 80 °C |
| Stromdichte | 0,5 A/dm² - 5 A/dm² |

### Beispiel 4: cyanidfreier Elektrolyt auf Methansulfonsäurebasis zur Abscheidung einer Cu-Sn-Bi Legierung

| | |
|---|---|
| Kupfer (II) | .0,25 mol/l - 0,35 mol/l |
| Zinn (II) | 0,10 mol/l - 0,20 mol/l |
| Bismut | 0,05 mol/l - 0,2 mol/l |
| Freie Säure | 0,8 mol/l - 2 mol/l |
| Additiv | 5 g/l- 50 g/l |
| Temperatur | 20 °C - 30 °C |
| Stromdichte | 0,5 A/dm² - 3 A/dm² |

### Beispiel 5: cyanidfreier Elektrolyt auf Tetrafluoroborsäurebasis zur Abscheidung einer Cu-Sn-Sb-Pb Legierung

| | |
|---|---|
| Kupfer (II) | 0,25 mol/l - 0,35 mol/l |
| Zinn (II) | 0,10 mol/l - 0,20 mol/l |
| Antimon (III) | 0,02 mol/l - 0,10 mol/l |
| Blei (II) | 0,05 mol/l - 0,5 mol/l |
| Freie Säure | 0,8 mol/l - 2 mol/l |
| Additiv | 5 g/l- 50 g/l |
| Temperatur | 20 °C - 30 °C |
| Stromdichte | 0,5 A/dm² - 3 A/dm² |

### Beispiel 6: cyanidfreier Elektrolyt auf Pyrophosphat- oder Phosphonatbasis zur Abscheidung einer Cu-Sn-In-Legierung

| | |
|---|---|
| Kupfer (II) | mol/l - 0,40 mol/l |
| Zinn (II) | 0,05 mol/l - 0,50 mol/l |
| Indium | 0,05 mol/l - 0,50 mol/l |
| pH-Wert | 8 - 10 |
| Additiv | 0,5 g/l - 50 g/l |
| Temperatur | 40 °C - 80 °C |
| Stromdichte | 0,5 A/dm² - 5 A/dm² |

### Beispiel 7: cyanidhaltiger Elektrolyt zur Abscheidung einer Cu-Sn-Zn Legierung

| | |
|---|---|
| Kupfer (I) | 0,25 mol/l - 0,35 mol/l |
| Zinn (IV) | 0,10 mol/l - 0,20 mol/l |
| Zink | 0,05 mol/l - 0,20 mol/l |
| Freies Cyanid | 0,30 mol/l - 0,45 mol/l |
| Freie Alkalität | 0,20 mol/l - 0,30 mol/l |
| Tartrat | 0 mol/l - 0,20 mol/l |
| Additiv | 0,5 g/l - 5 g/l |
| Temperatur | .55 °C - 65 °C |
| Stromdichte | 1 A/dm² - 4 A/dm² |

### Beispiel 8: cyanidhaltiger Elektrolyt zur Abscheidung einer Cu-Ge-Zn Legierung

| | |
|---|---|
| Kupfer (I) | 0,25 mol/l - 0,35 mol/l |
| Germanium | 0,05 mol/l - 0,30 mol/l |
| Zink | 0,05 mol/l - 0,20 mol/l |
| Freies Cyanid | 0,30 mol/l - 0,45 mol/l |
| Freie Alkalität | 0,20 mol/l - 1,0 mol/l |
| Citrat | 0 mol/l - 0,20 mol/l |
| Additiv | 0,5 g/l - 5 g/l |
| Temperatur | 55 °C - 65 °C |
| Stromdichte | 1 A/dm² - 4 A/dm² |

In der bevorzugten Ausführung des Elektrolyts enthält dieser neben den Salzen für die abzuscheidenden Metalle auch organische Verbindungen. Insbesondere sind dies im Falle cyanidischer Elektrolyte Polycarbonsäuresalze wie Citrat oder Tartrat, im Falle der nicht cyanidischer saurer Elektrolyte Naphthol oder Naphtholderivate.

### Folgende Salze können zur Abscheidung der Metalle verwendet werden:

Kupfer kann als Kupfer(II)tetrafluoroborat, Kupfer(II)methansulfonat, Kupfer(II)sulfat, Kupfer(II)pyrophosphat, Kupfer(I)cyanid, Kupfersalze von Hydroxy- und/oder Aminophosphonsäuren eingesetzt werden. Generell kann die Konzentration an Kupfer im Elektrolyt zwischen 0,05 mol/l und 1 mol/l betragen.

Zinn kann als Zinn(II)tetrafluoroborat, Zinn(II)methansulfonat, Zinn(II)sulfat, Zinn(II)pyrophosphat, Natriumstannat, Kaliumstannat, Zinn(II)salze von Hydroxy- und/oder Aminophosphonsäuren eingesetzt werden. Generell kann die Konzentration an Zinn im Elektrolyt bis zu 0,5 mol/l betragen.

Zink kann als Zink(II)tetrafluoroborat, Zink(II)methansulfonat, Zink(II)sulfat, Zink(II)pyrophosphat, Zinkoxid, Zinkcyanid, Zink(II)salze von Hydroxy- und/oder Aminophosphonsäuren eingesetzt werden. Generell kann die Konzentration an Zink im Elektrolyt bis zu 0,5 mol/l betragen.

Germanium kann als Germaniumoxid oder Natrium- oder Kaliumgermanat eingesetzt werden. Generell kann die Konzentration an Germanium im Elektrolyt bis zu 0,5 mol/l betragen.

Indium kann als Indiumoxid, Indiumcyanid, Indiumsulfat, Indiumfluoroborat, Indiummethansulfonat eingesetzt werden. Generell kann die Konzentration an Indium im Elektrolyt bis zu 0,5 mol/l betragen.

Nickel kann als Nickel(II)tetrafluoroborat, Nickel(II)methansulfonat, Nickel(II)sulfat, Ammonium-Nickel-Sulfat, Nickel(II)chlorid, Nickel(II)pyrophosphat, Nickel(II)oxid eingesetzt werden. Generell kann die Konzentration an Nickel im Elektrolyt bis zu 1 mol/l betragen.

Cobalt kann in der gleichen Form und Konzentration wie Nickel eingesetzt werden.

Bismut kann als Bismuttrifluorid, Bismut(III)methansulfonat, Bismut(III)sulfat, Bismut(III)pyrophosphat, Bismutoxid, Natrium- oder Kaliumbismutat eingesetzt werden. Generell kann die Konzentration an Bismut im Elektrolyt bis zu 0,5 mol/l betragen.

Blei kann als Blei(II)tetrafluoroborat, Blei(II)methansulfonat, Blei(II)pyrophosphat, Bleiacetat, Blei(II)oxid, Natrium- oder Kaliumplumbat eingesetzt werden. Generell kann die Konzentration an Blei im Elektrolyt bis zu 0,3 mol/l betragen.

Silber kann als Cyanid, Alkalisilbercyanid, Silbermethansulfonat, Silbernitrat eingesetzt werden. Generell kann die Konzentration an Antimon im Elektrolyt bis zu 0,5 mol/l betragen.

Antimon kann als Antimon(III)tetrafluoroborat, Antimontrifluorid, Antimon(III)oxid, Kaliumantimontartrat eingesetzt werden. Generell kann die Konzentration an Antimon im Elektrolyt bis zu 0,2 mol/l betragen.

Mögliche Stabilisatoren bzw. Grundelektrolyte, Leitsalze oder Komplexbildner sind: Alkalicyanide, Alkalihydroxide, Tetrafluoroborsäure, Flusssäure, Methansulfonsäure, Weinsäure und deren Alkali- und Ammoniumsalze, Citronensäure und deren Alkali- und Ammoniumsalze, Ammonium- und Alkalipyrophosphate, Phosphonsäure und deren Alkali- und Ammoniumsalze, 2,2-Ethylendithiodiethanol, Hydantion und dessen Derivate, Succinimid und dessen Derivate, Phenol - und Kresolsulfonsäuren, in einer Gesamtkonzentration zwischen 0,1 mol/l und 2 mol/l.

Mögliche Oxidationsinhibitoren in cyanidfreien Elektrolyten sind: Resorcin, Hydrochinon, Brenzkatechin, Pyrogallol, Formaldehyd, Methanol, in einer Gesamtkonzentration zwischen 0,03 mol/l und 0,3 mol/l.

Mögliche Additive sind: Phenolphthalein, Alpha- oder Beta-Naphtol und deren Ethoxylate, Alpha- und Beta-Naphtholsulphonsäure und deren Ethoxylate, o-Toluidin, Hydroxychinolin, Ligninsulfonat, Butindiol, in einer Gesamtkonzentration zwischen 0,0005 mol/l und 0,05 mol/l, bevorzugt 0,002 mol/l und 0,02 mol/l und Gelatine, Leim, nichtionische und kationische Tenside, Aminoverbindungen, beispielsweise C8-C20-amidopropylamine und deren Derivate, Polyethylenglycol und dessen funktionalisierte Derivate, Pepton, Glycin, in einer Gesamtkonzentration zwischen 0 g/l - 50 g/l.

Es können jeweils auch Mischungen aus den voranstehend genannten Bestandteilen der Elektrolyte verwendet werden, also z.B. zumindest zwei Salze eines bzw. des jeweiligen Metalls und/oder zumindest zwei Stabilisatoren und/oder zumindest zwei Oxidationsinhibitoren und/oder zumindest zwei Additive.

Zu beachten ist, dass aus Sicherheitsgründen cyanidhaltige Elektrolyte nur aus alkalischen Salzen oder Vormischungen hergestellt werden dürfen.

Die Legierungselemente können in Form der oben genannten, löslichen Verbindungen oder Komplexe einem entsprechenden Elektrolyten zugesetzt und aus diesem mit abgeschieden werden. Ebenso ist eine Legierungsbildung durch Eindiffusion der Elemente in die Schicht oder Mitabscheidung von im Elektrolyten suspendierten Partikeln möglich.

Neben der galvanischen Abscheidung der Diffusionssperrschicht 4 kann diese auch auf thermophysikalischem Weg hergestellt werden, wobei in diesem Fall die Diffusionssperrschicht 4 teilweise aus der Gleitschicht 5 durch Diffusion von Zinn gebildet wird, sodass also als Zwischenschicht im Mehrschichtgleitlager 1 vorerst auch eine reine Kupferschicht vorgelegt werden kann, aus der sich in der Folge die Diffusionssperrschicht 4 bildet. Dazu wird das Mehrschichtgleitlager 1 zumindest einer Wärmebehandlung, insbesondere bei einer Temperatur zwischen 130 °C und 220 °C, vorzugsweise zwischen 150°C und 215°C, besonders bevorzugt zwischen 165 °C und 190°C, also unterhalb des ersten Aufschmelzens der Legierung, für eine Zeit zwischen 0,5 h und 100 h, insbesondere zwischen 1 h und 10 h, vorzugsweise zwischen 1,5 h und 4 h, unterzogen.

Ziel dieser untypisch hohen Wärmebehandlung bei einer Temperatur zwischen 80 % und 98 %, vorzugsweise zwischen 87 % und 92%, der absoluten Schmelztemperatur des Zinns (505 K) ist es, dass sich intermetallische Phasen zwischen Kupfer und Zinn bilden, insbesondere Cu₆Sn₅. Der Anteil an diesen intermetallischen Phasen, insbesondere an Cu₆Sn₅, kann zwischen 1 Gew.-% und 10 Gew.-%, insbesondere zwischen 2 Gew.-% und 6 Gew.-%, betragen.

Die Temperatur der Wärmebehandlung liegt auch über der Temperatur, die während des normalen Betriebs in der Lagerstelle zu erwarten wäre.

Bei Schichten, die einen Summenanteil von Kupfer, Nickel, Zink und Silber von über 3,3 Gew.-% oder einen Summenanteil von Bismut und Blei von über 0,9 Gew.-% enthalten, ist es von Vorteil, wenn die Temperatur einer Wärmebehandlung 200°C, vorzugsweise 180°C, nicht übersteigt. Dadurch kann verhindert werden, dass beispielsweise an Korngrenzen konzentrierte Legierungselemente Eutektika bilden und aufschmelzen.

Durch die thermophysikalische Herstellung der Diffusionssperrschicht 4 ist es auch möglich, diese mit einem Konzentrationsgradienten an zumindest einem Legierungselement auszubilden, sodass also die Diffusionssperrschicht 4 Subschichten aufweisen kann. Beispielsweise ist es möglich, dass die Diffusionssperrschicht 4 eine erste radial innere Subschicht mit Cu₆Sn₅ aufweist und eine weitere untere, an die erste Subschicht anschließende Subschicht mit Cu₃Sn aufweist. Vorzugsweise ist dabei die radial äußere Subschicht dünner als die obere Subschicht. Es kann damit die Haftung der Diffusionssperrschicht 4 einerseits und der Gleitschicht 5 andererseits verbessert werden, insbesondere wenn diese im Betrieb Verformungen unterworfen sind.

Die Schichtdicke der radial äußeren Subschicht kann zwischen 0,05 µm und 4 µm, insbesondere zwischen 0,05 µm und 1 µm, betragen.

Die Schichtdicke der ersten, radial inneren Subschicht kann zwischen 2 µm und 9 µm, insbesondere zwischen 2 µm und 6 µm, betragen. Bei Schichtdicken von mehr als 10 µm wird die Barrierewirkung verringert, da die Schicht spröder wird.

Es sei darauf hingewiesen, dass auch im Falle der thermophysikalischen Herstellung der Diffusionssperrschicht 4 diese keine Sinterschicht ist.

Für den Fall, dass die Diffusionssperrschicht 4 auf thermophysikalische Weise hergestellt wird und die Lagermetallschicht 3 Blei enthält, wird vorzugsweise zwischen der Diffusionssperrschicht 4 und der Lagermetallschicht 3 eine weitere Zwischensicht aus Nickel angeordnet, um die Diffusion von Blei aus der Lagermetallschicht 3 in die Gleitschicht 5 zu vermeiden.

Es sei an dieser Stelle weiter darauf hingewiesen, dass neben der Vierschichtvariante generell das Mehrschichtgleitlager 1 auch noch weitere Schichten aufweisen kann, insbesondere zwischen der Lagermetallschicht 3 und der Diffusionssperrschicht 4 eine Haftvermittlerschicht, z.B. aus Nickel, oder andere Zwischenschichten, wie z.B. auf Eisenbasis, ebenso kann zwischen der Lagermetallschicht 3 und der Stützschicht 2 eine Haftvermittlerschicht angeordnet werden.

Wie bereits voranstehend ausgeführt, muss die Diffusionssperrschicht 4 überraschenderweise nicht durchgängig über die gesamte Oberfläche der Lagermetallschicht 3 ausgebildet sein. Um eine ausreichende Barriere gegen den Zinnverlust aus der Gleitschicht 5 zu erreichen, wurde gefunden, dass es genügt, wenn sich die Diffusionssperrschicht 4 über zumindest 85 % dieser Oberfläche erstreckt. Dabei ist es jedoch von Vorteil, wenn die Diffusionssperrschicht 4 eine durchschnittliche Schichtdicke 7 von mindestens 0,5 µm aufweist. Die durchschnittliche Schichtdicke 7 wird dabei aus den Schichtdicken 7 der Diffusionssperrschicht 4 anhand von zehn verschiedenen Querschnitten durch das Mehrschichtgleitlager 1 als arithmetisches Mittel bestimmt.

Vorzugsweise weist die Diffusionssperrschicht 4 jedoch über zumindest 85 % ihrer Fläche eine Schichtdicke von zumindest 0,5 µm, insbesondere zumindest 1 µm, besonders bevorzugt zumindest 2 µm, auf. Hinsichtlich einer maximalen Schichtdicke 7 der Diffusionssperrschicht 7 bestehen an und für sich keine Einschränkungen. Aus praktischen Erwägungen wird man jedoch die Schichtdicke 7 der Diffusionssperrschicht 7 nicht größer als 10 µm, insbesondere nicht größer als 5 µm, wählen.

Die Schichtdicke 7 der Diffusionssperrschicht 4 kann über die Dauer der elektrochemischen Abscheidung bzw. der Wärmebehandlung des Mehrschichtgleitlagers 1 eingestellt werden.

Im Rahmen der Herstellung von Testmustern wurden folgende Untersuchungen durchgeführt. Sämtliche hergestellten Mehrschichtgleitlager wurden einer Wärmebehandlung unterzogen, um damit eine möglicherweise auftretende Diffusion von Zinn zu initiieren.

Der Vollständigkeit halber sei angeführt, dass im Folgenden eine Angabe wie z.B. CuSn10 bedeutet, dass es sich um eine Kupferlegierung mit 10 Gew.-% Zinn und dem Rest Kupfer handelt.

### Beispiel 1:

Es wurde ein Mehrschichtgleitlager 1 mit dem Aufbau Stahl-Stützschicht 2/Bronze (CuSn5) Lagermetallschicht 3/Nickelzwischenschicht/vollständig geschlossene galvanisch abgeschiedene CuSn10-Diffusionssperrschicht 4 mit einer durchschnittlichen Schichtdicke von 2 µm/SnCu3-Gleitschicht 5 hergestellt.

Nach einer Wärmebehandlung bei 160 °C über eine Dauer von 1000 Stunden ist Schichtdicke 7 die Diffusionssperrschicht 4 lediglich auf 4 µm angewachsen. Die Nickelzwischenschicht wies keine Anzeichen von Diffusion auf.

### Beispiel 2:

Es wurde das Beispiel 1 wiederholt, wobei allerdings die Diffusionssperrschicht 4 aus 45 Gew.-% Cu und 55 Gew.-% Sn bestand.

Nach der gleichen Wärmebehandlung zeigten sich dieselben Ergebnisse wie bei Beispiel 1.

### Beispiel 3:

Es wurde ein Mehrschichtgleitlager 1 mit dem Aufbau Stahl-Stützschicht 2/Bronze (CuSn5) Lagermetallschicht 3/ Nickelzwischenschicht mit einer durchschnittlichen Schichtdicke von 2 µm / Cu-Zwischenschicht mit einer durchschnittlichen Schichtdicke von 1 µm/SnCu3Sb-Gleitschicht 5 hergestellt. Die Gleitschicht 5 wies einen Nickelgehalt von weniger als 0,1 Gew.-% auf Zur Herstellung der Diffusionssperrschicht 4 wurde dieses einer Wärmebehandlung für 5 Stunden bei 170 °C unterzogen. Die Diffusionssperrschicht 4 wies danach einen Kupfergehalt von 45 Gew.-% auf. Der Nickelgehalt betrug maximal 5 Gew.-%. Den Rest auf 100 Gew.-% bildete Zinn. Die Diffusionssperrschicht hatte eine Schichtdicke 7 von 2 µm bis 3 µm.

Nach einer weiteren Wärmebehandlung bei 130 °C für 10000 Stunden war die Diffusionssperrschicht 4 auf lediglich insgesamt 5 µm angewachsen. Diese bestand aus einer Subschicht mit 45 Gew.-% Cu (Rest Sn), sowie einer darunter liegenden Subschicht mit 65 Gew.-% Cu (Rest Sn). Es war zudem noch eine lauffähige Restzinnschicht als Gleitschicht 4 vorhanden. Überraschenderweise wurde die Nickelschicht durch diese Wärmebehandlung, die die Betriebsbelastung simuliert, nicht angegriffen, Ebenso hat sich der Nickelgehalt in der Gleitschicht 5 nicht wesentlich verändert.

### Vergleichsbeispiel 1

Es wurde ein Mehrschichtgleitlager 1 mit dem Aufbau Stahl-Stützschicht 2/Bronze (CuSn5) Lagermetallschicht 3/Nickelzwischenschicht/SnCu3-Gleitschicht 5 hergestellt. Das Mehrschichtgleitlager 1 wies also keine erfindungsgemäße Diffusionssperrschicht 4 auf.

Im Laufe einer Wärmebehandlung von 1000 Stunden bei 160 ° wurde der Schichtaufbau vollständig zerstört. Es bildete sich eine durchgängige, ungleichmäßige Barrierezone aus Zinn mit 35 Gew.-% Kupfer aus, die eine durchschnittliche Dicke von 8 µm aufwies. Der Nickelgehalt in dieser Barrierezone betrug 15 Gew.-%. Durch die gebildeten Hartphasen war das Mehrschichtgleitlager 1 nicht mehr lauffähig. Die SnCu3-Gleitschicht 5 war im Wesentlichen aufgebraucht und nicht mehr lauffähig.

### Vergleichsbeispiel 2

Es wurde das Vergleichsbeispiel 1 hinsichtlich des Aufbaus wiederholt, wobei jedoch als Gleitschicht 5 eine Reinzinnschicht verwendet wurde.

Das Mehrschichtgleitlager 1 wurde einer Wärmebehandlung von 5 Stunden bei 170 °C unterzogen. Nach einer weiteren Temperaturerhöhung auf 200 °C war die gesamte Gleitschicht 5 durch Bildung von intermetallischen Phasen verbraucht. Die Schmutzempfindlichkeit stieg, sodass das Mehrschichtgleitlager 1 insgesamt kein gutes Laufverhalten mehr zeigte.

### Vergleichsbeispiel 3:

Es wurde ein Mehrschichtgleitlager 1 mit dem Aufbau Stahl-Stützschicht 2/Bronze (CuSn5) Lagermetallschicht 3/ Nickelzwischenschicht mit einer durchschnittlichen Schichtdicke von 2 µm / SnCu3Sb-Gleitschicht 5 hergestellt.

Nach einer weiteren Wärmebehandlung bei 130 °C für 10000 Stunden bildeten sich in der Gleitschicht 5 spratzige Nickelausscheidungen. Der Nickelgehalt in der Gleitschicht 5 stieg auf über 1 Gew.-%. Der Kupfergehalt hat hingegen auf annähernd 0 Gew.-% abgenommen.

### Vergleichsbeispiel 4:

Es wurde ein Mehrschichtgleitlager 1 mit dem Aufbau Stahl-Stützschicht 2/Bronze (CuSn5) Lagermetallschicht 3/ Nickelzwischenschicht mit einer durchschnittlichen Schichtdicke von 2 µm / Diffusionssperrschicht 5 aus einer Legierung mit 15 Gew.-% Kupfer und einer Schichtdicker von 2 µm/ SnCu3 Sb-Gleitschicht 5 hergestellt. Die Diffusionssperrschicht 4 wies eine Härte nach Vickers von 50 HV auf.

Nach einer Wärmebehandlung bei einer Temperatur von 130 °C für eine Dauer von 10000 Stunden ist der Anteil an Kupfer in der Diffusionssperrschicht auf 8 Gew.-% abgesunken. Die Härte nach Vickers ist auf 35 HV gesunken. Die Schichtdicke der Diffusionssperrschicht ist hingegen von 3 µm auf 5 µm angewachsen. Die Schichtdicke der Laufschicht hat sich, zum Unterschied zu den Beispielen nach der Erfindung, stark verringert.

Folgende weitere Zusammensetzungen für Diffusionssperrschichten 4 wurden untersucht. Sämtliche Angabe zur Zusammensetzung sind in Gew.-% zu verstehen. Den Rest auf 100 Gew.-% bildet jeweils Kupfer.

**Tabelle 1_Zusammensetzungen von Diffusionssperrschichten 4:**

| | Ge | Sn | In | Zn | Ni | Co | Bi | Pb | Ag | Sb |
|---|---|---|---|---|---|---|---|---|---|---|
| 1 | 10 | | | | | | | | | |
| 2 | | | | | 10 | | | | | |
| 3 | | | | | | | | 8 | | |
| 4 | | | | | | | | | 5 | |
| 5 | | | | 0,5 | | | | | | |
| 6 | | | | | | | | | | 3 |
| 7 | | | | | | 10 | | | | |
| 8 | | | | | 2 | | | | | 30 |
| 9 | | | 20 | | | | | | | |
| 10 | 4 | | | 5 | | | | | | |
| 11 | 10 | | | | | | | | 1 | |
| 12 | 15 | | 1 | | 5 | | | | | |
| 13 | | 10 | 3 | | | | | | | 7 |
| 14 | | 15 | 2 | | | | | | | |
| 15 | | 20 | | 3 | | | | | | |
| 16 | | 10 | | 5 | | 0,2 | | | | |
| 17 | | 13 | | 1 | | | | | | 8 |
| 18 | | 10 | | 1 | | | | 10 | | |
| 19 | | 10 | | | | | 15 | | | |
| 20 | | 5 | | 5 | | | | 15 | | |
| 21 | | 5 | | | | | | | | 3 |
| 22 | 3 | 10 | | | | | | | | |
| 23 | | 17 | | 2 | | | 10 | | | |
| 24 | | 12 | | | | | | 9 | | |
| 25 | 3 | 5 | | 5 | | | | | | |
| 26 | | 11 | 0,2 | | | | | | | 20 |
| 27 | | 24 | | | | 5 | | | | |
| 28 | | | | 15 | 1 | | | 25 | | |
| 29 | | | | | | | | | 20 | |
| 30 | | | 10 | | | | | | | 12 |
| 31 | | | 15 | | | | | | | 18 |
| 32 | | | 20 | | | | | | | |
| 33 | | | | 25 | | 5 | | | | |
| 34 | | | 8 | | | | 20 | 1 | | |
| 35 | | | 2 | | | | | 25 | | 3 |
| 36 | 8 | | | 1 | | | | | 20 | |
| 37 | | 31 | | | < 0,1 | | | | | |
| 38 | | 39 | | | 0,5 | | 1 | | | |
| 39 | | 48 | | | 1 | | | | | |
| 40 | | 55 | | | < 0,1 | | | | | |
| 41 | | 67 | | | | | | | | |
| 42 | | 22 | | | | | | | | 12 |
| 43 | | 27 | | | | | | | | 29 |
| 44 | | 40 | | | | | 2 | | | 9 |
| 45 | | 18 | | | 1 | | | | | 25 |
| 46 | | 45 | | | 2 | | | | | 18 |
| 47 | | 55 | | | < 0,1 | | | | | 9 |
| 48 | | 53 | | | | | | | | 3 |
| 49 | | 29 | | | | | | | | 1 |
| 50 | | 61 | | | | | | | | 3 |
| 51 | | 42 | | | | | | | | |

Es wurden mit sämtlichen dieser Beispiele aus Tabelle 1 Mehrschichtgleitlager 1 entsprechend dem Aufbau nach Beispiel 1 hergestellt, wobei die Diffusionssperrschicht 4 durch die jeweilige Legierung aus Tabelle 1 ersetzt wurde. Nach einer Wärmebehandlung bei 170 °C für eine Dauer von 1000 Stunden zeigten die Testmuster praktisch keine Änderung der Schichtdicke der Diffusionssperrschicht 4.

Es wurden weiter Untersuchungen hinsichtlich der Schichtstärke 7 der Diffusionssperrschicht 4 durchgeführt. Dazu wurde das Beispiel 1 wiederholt, wobei die Abscheidedauer der galvanischen Herstellung der Diffusionssperrschicht 4 zwischen 20 Sekunden und 5 Minuten variiert wurde. Mit einer Abscheidedauer von 20 Sekunden wurde eine durchschnittliche Schichtdicke 7 von unter 0,5 µm und mit einer Abscheidedauer von 30 Sekunden wurde eine durchschnittliche Schichtdicke 7 von mindestens 0,5 µm hergestellt. Dabei zeigten sich bei der Ausbildung der Diffusionssperrschicht 4 mit einer geringeren durchschnittlichen Schichtdicke 7 als 0,5 µm nach der Wärmebehandlung gemäß Beispiel 1 deutliche Diffusionsspuren. Bei einer durchschnittlichen Schichtdicke 7 von mindestens 0,5 µm waren zwar auch noch Diffusionsspuren erkennbar, allerdings wies das Mehrschichtgleitlager 1 nach der Wärmebehandlung noch eine lauffähige Gleitschicht 5 auf.

Deutliche bessere Ergebnisse hinsichtlich der Diffusion wurden erreicht, wenn die Diffusionssperrschicht über zumindest 85 % ihrer Fläche eine Schichtdicke von zumindest 0,5 µm aufweist. Dies wird durch Verlängerung der galvanischen Abscheidedauer oder durch Verlängerung der thermophysikalischen Behandlung erreicht.

Unter Verwendung eines Elektrolyts gemäß Beispiel 1 wurde eine Diffusionssperrschicht 4 auf einem Stahlträger als Stützschicht 2, der mit einer CuSn5-Lagermetallschicht 3 versehen war. Auf diese Diffusionssperrschicht 4 wurde anschließend eine SnCu3 Gleitschicht galvanisch abgeschieden. Röntgendiffraktometrische Untersuchungen zeigten, dass in der β-Zinnphase der Diffusionssperrschicht 4 Körner aus Cu6Sn5 eingelagert waren.

Die Ausführungsbeispiele beschreiben mögliche Ausführungsvarianten des Mehrschichtgleitlagers 1, wobei an dieser Stelle bemerkt sei, dass auch diverse Kombinationen der einzelnen Ausführungsvarianten untereinander möglich sind.

Der Ordnung halber sei abschließend darauf hingewiesen, dass zum besseren Verständnis des Aufbaus Mehrschichtgleitlagers 1 dieses bzw. dessen Bestandteile teilweise unmaßstäblich und/oder vergrößert und/oder verkleinert dargestellt wurden.

### Bezugszeichenaufstellung

- 1: Mehrschichtgleitlager
- 2: Stützschicht
- 3: Lagermetallschicht
- 4: Diffusionssperrschicht
- 5: Gleitschicht
- 6: Lauffläche
- 7: Schichtdicke

## Patentansprüche

1. Mehrschichtgleitlager (1) umfassend in der angegebenen Reihenfolge eine Stützschicht (2), eine Lagermetallschicht (3), eine Diffusionssperrschicht (4) und eine Gleitschicht (5), wobei die Gleitschicht (5) aus einer Zinnbasislegierung gebildet ist und die Diffusionssperrschicht (4) aus einer Legierung, insbesondere einer Kupferlegierung, besteht, die einen Kupfergehalt von mindestens 30 Gew.-% aufweist, **dadurch gekennzeichnet, dass** die Diffusionssperrschicht (4) nicht durchgängig über die gesamte Fläche zwischen der Lagermetallschicht (3) und der Gleitschicht (5) ausgebildet ist, sich jedoch über zumindest 85 % dieser Fläche erstreckt.

2. Mehrschichtgleitlager (1) nach Anspruch 1, **dadurch gekennzeichnet, dass** die Lagermetallschicht (3) Kupfer enthält, insbesondere aus einer Kupferbasislegierung gebildet ist.

3. Mehrschichtgleitlager (1) nach Anspruch 1 oder 2, **dadurch gekennzeichnet, dass** die Diffusionssperrschicht (4) eine durchschnittliche Schichtdicke (7) von mindestens 0,5 µm aufweist.

4. Mehrschichtgleitlager (1) nach einem der Ansprüche 1 bis 3, **dadurch gekennzeichnet, dass** die Diffusionssperrschicht (4) über zumindest 85 % ihrer Fläche eine Schichtdicke (7) von zumindest 0,5 µm aufweist.

5. Mehrschichtgleitlager (1) nach einem der Ansprüche 1 bis 4, **dadurch gekennzeichnet, dass** zwischen der Lagermetallschicht (3) und der Diffusionssperrschicht (4) eine Nickelschicht angeordnet ist.

6. Mehrschichtgleitlager (1) nach einem der Ansprüche 1 bis 5, **dadurch gekennzeichnet, dass** die Diffusionssperrschicht (4) maximal 10 Gew.-% Nickel enthält.

7. Mehrschichtgleitlager (1) nach einem der Ansprüche 1 bis 6, **dadurch gekennzeichnet, dass** die Diffusionssperrschicht (4) zwischen 3 Gew.-% und 30 Gew.-% Antimon enthält.

8. Mehrschichtgleitlager (1) nach einem der Ansprüche 1 bis 7, **dadurch gekennzeichnet, dass** die Zinnbasislegierung der Gleitschicht (5) zwischen 0 Gew.-% und 25 Gew.-% Kupfer und zwischen 0 Gew.-% und 15 Gew.-% Antimon enthält, mit der Maßgabe, dass der Summenanteil an Antimon und Kupfer zwischen 2 Gew.-% und 25 Gew.-% beträgt.

## Claims

1. A multi-layer sliding bearing (1), comprising in the specified order a support layer (2), a bearing metal layer (3), a diffusion barrier layer (4) and a sliding layer (5), wherein the sliding layer (5) is made from a tin base alloy and the diffusion barrier layer (4) consists of an alloy, in particular a copper alloy, which has a copper content of at least 30 wt.%, **characterized in that** the diffusion barrier layer (4) is not formed continuously across the entire surface between the bearing metal layer (3) and the sliding layer (5), but does extend across at least 85 % of this surface.

2. The multi-layer sliding bearing (1) according to claim 1, **characterized in that** the bearing metal layer (3) contains copper, in particular is made of a copper base alloy.

3. The multi-layer sliding bearing (1) according to claim 1 or 2, **characterized in that** the diffusion barrier layer (4) has an average layer thickness (7) of at least 0.5 µm.

4. The multi-layer sliding bearing (1) according to one of claims 1 to 3, **characterized in that** the diffusion barrier layer (4) has layer thickness (7) of at least 0.5 µm across at least 85 % of its surface.

5. The multi-layer sliding bearing (1) according to one of claims 1 to 4, **characterized in that** a nickel layer is arranged between the bearing metal layer (3) and the diffusion barrier layer (4).

6. The multi-layer sliding bearing (1) according to one of claims 1 to 5, **characterized in that** the diffusion barrier layer (4) contains a maximum of 10 wt.% nickel.

7. The multi-layer sliding bearing (1) according to one of claims 1 to 6, **characterized in that** the diffusion barrier layer (4) contains between 3 wt.% and 30 wt.% antimony.

8. The multi-layer sliding bearing (1) according to one of claims 1 to 7, **characterized in that** the tin base alloy of the sliding layer (5) contains between 0 wt.% and 25 wt.% copper and between 0 wt.% and 15 wt.% antimony, with the proviso that the summary proportion of antimony and copper is between 2 wt.% and 25 wt.%.

## Revendications

1. Palier lisse multicouche (1), comprenant dans l'ordre indiqué une couche support (2), une couche de métal antifriction (3), une couche anti-diffusion (4) et une couche antifriction (5), la couche antifriction (5) étant formée d'un alliage à base d'étain, et la couche anti-diffusion (4) étant composée d'un alliage, en particulier un alliage de cuivre qui présente une teneur en cuivre d'au moins 30 %-poids, **caractérisé en ce que** la couche anti-diffusion (4) n'est pas constituée de façon continue sur toute la surface entre la couche de métal antifriction (3) et la couche antifriction (5), mais s'étend cependant sur au moins 85 % de cette surface.

2. Palier lisse multicouche (1) selon la revendication 1, **caractérisé en ce que** la couche de métal antifriction (3) contient du cuivre, en particulier est formée d'un alliage à base de cuivre.

3. Palier lisse multicouche (1) selon la revendication 1 ou 2, **caractérisé en ce que** la couche anti-diffusion (4) présente une épaisseur de couche (7) moyenne d'au moins 0,5 µm.

4. Palier lisse multicouche (1) selon l'une des revendications 1 à 3, **caractérisé en ce que** la couche anti-diffusion (4) présente une épaisseur de couche (7) d'au moins 0,5 µm sur au moins 85 % de sa surface.

5. Palier lisse multicouche (1) selon l'une des revendications 1 à 4, **caractérisé en ce qu'**une couche de nickel est disposée entre la couche de métal antifriction (3) et la couche anti-diffusion (4).

6. Palier lisse multicouche (1) selon l'une des revendications 1 à 5, **caractérisé en ce que** la couche anti-diffusion (4) contient au maximum 10 %-poids de nickel.

7. Palier lisse multicouche (1) selon l'une des revendications 1 à 6, **caractérisé en ce que** la couche anti-diffusion (4) contient entre 3 %-poids et 30 %-poids d'antimoine.

8. Palier lisse multicouche (1) selon l'une des revendications 1 à 7, **caractérisé en ce que** l'alliage à base d'étain de la couche antifriction (5) contient entre 0 %-poids et 25 %-poids de cuivre et entre 0 %-poids et 15 %-poids d'antimoine, avec la condition que la proportion totale d'antimoine et de cuivre soit comprise entre 2 %-poids et 25 %-poids.
